# EUROPEAN PATENT APPLICATION

(11) **EP 2 541 472 A1**
(43) Date of publication of application: **02.01.2013**
(21) Application number: 11250623.3
(22) Date of filing: 30.06.2011
(51) Int. Cl.: G06Q 10/00, G06F 17/30

(54) **Data processing system**

(71) Applicant: British Telecommunications Public Limited Company, London EC1A 7AJ (GB)
(72) Inventor: The designation of the inventor has not yet been filed
(74) Representative: Cardus, Alan Peter

(57) **Abstract**

An method and corresponding apparatus for detecting a change in an aspect of performance of a data processing system and for adjusting operation of a system so as to counter the detected change. The method generating a value representative of an aspect of performance of a data processing system relative to operation of the system in a first sub-period of each in a plurality of first time periods; in which each first sub-period is located with they same degree of offset within the respective first time period. The generated value may represent a norm or typical value for the aspect of behaviour in the sub-period. The method for detecting a change in the aspect of performance by comparing the value generated with a value indicative of the aspect of performance relative to operation of the system in a second sub-period of a second time period; in which the second sub-period is located with a degree of offset relative to the second time period that is the same as the degree of offset each first sub-period has relative to the respective first time period. The method also for initiating adjustment of operation of the system so as to counter the detected change in the aspect of performance of the system.

## Description

### Introduction

The invention relates to the field of data processing systems and, in particular, to monitoring data processing system performance.

Complex data processing systems whose performance is crucial to critical systems in business, commerce and communications are increasingly common. Such systems may be associated with a minimum level (often referred to as service level agreement or SLA) below which performance is deemed unacceptable. Such systems may be provided with automatic monitoring systems, which collect data on aspects of operation of the complex data processing system relating to how well the system is performing. This data is often referred to as key performance indicators (KPI). The KPls may relate to aspects of hardware, data, system or application software or user code and the term "data processing system" as used here, is to be interpreted to cover all such aspects. In a large-scale complex data processing system, however, the key performance indicators may be produced in such high volumes that it is difficult to analyse them so as to identify a trend or a significant change in behaviour that requires corrective action to ensure that the SLA applied to the system is achieved.

The Oracle database is an example of a data processing system that has such an automatic monitoring system, known as Automatic Workload Repository (AWR). The Automatic Workload Repository provides representations of database KPls. These KPIs may contain information about response time, throughput, resource consumption, wait events or other performance indicators for activities of the database. The AWR keeps so-called "snapshots", taken at regular intervals, of KPls of the Oracle Database. A snapshot is a set of historical data relating to operation of the database over a specific continuous time interval. Typically, AWR automatically generates a snapshot of the performance data once every hour and retains the data for seven days.

The information collected for the AWR may be displayed in Oracle Active Session History (ASH). The ASH is a database view that provides information derived from sampling database activity in snapshots, however, at times of high database activity, the amount of information comprised in the ASH may be too great to be processed immediately or even to be stored for later processing, so that divergence from expected performance may be missed.

The data in the snapshot may be analyzed by Oracle Automatic Database Diagnostic Monitor (ADDM). ADDM is a self-diagnostic mechanism that may be used by a database administrator to reactively examine and analyze data for any snapshot period (i.e. any continuous time period in the past - e.g. data relating to the previous hour's operation) with the aim of identifying a performance-affecting issue arising during the snapshot period.

There is therefore a need to monitor the operation of data processing systems in order to detect changes in the performance thereof. This is complicated by the following two factors:
The indicators of performance (KPls) generated by the data processing system may take the form of a large amount of data. This requires a significant effort to process and analyse so as to detect trends or divergence from expected behaviour;
During normal operation, the performance of the system (and the KPls) will typically be cyclical, varying over a time period of interest (say a day, a year, a financial reporting period) due to external factors - i.e. factors not under the direct control of the operator of the data processing system. A call centre may become less active during a lunch period when operators break for lunch. A financial reporting system will normally become busier towards the end of each financial reporting period. A telephone system will normally be less busy between midnight and 6 am. Variations caused by these external factors may make it difficult to spot changes of significance due to internal or other factors.

### Statement of Invention

The invention addresses these problems by analysing KPIs relating to operation over discontinuous or non-contiguous time intervals.

The invention generates a value (representing the norm or expected behaviour) representative of an aspect of performance over a plurality of first time periods with respect to operation of the system in a plurality of discontinuous or non-contiguous time intervals, i.e. a sub-period in each of a plurality of first time periods, in which the sub-periods correspond by having the same degree of offset relative to the respective first time period. This generated value is then compared with a value (typically representing performance in a current or recent time period) indicative of the aspect of performance in a corresponding time sub-division, i.e. a time sub-division having the same degree of offset relative to a second time period. Where the comparison indicates significant divergence from expected behaviour of the system, action may be initiated to improve the performance of the system.

For the avoidance of doubt, a sub-period is smaller than the period of which it forms a part.

According to a first aspect of the invention, an apparatus is proposed comprising means for generating a value representative of an aspect of performance of a data processing system relative to operation of the system in a first sub-period of each in a plurality of first time periods; in which each first sub-period is located with the same degree of offset within the respective first time period; the apparatus further comprising means for detecting a change in the aspect of performance by comparing the value generated with a value indicative of the aspect of performance relative to operation of the system in a second sub-period of a second time period; in which the second sub-period is located with a degree of offset relative to the second time period that is the same as the degree of offset each first sub-period has relative to the respective first time period; and the apparatus further comprising means for initiating adjustment of operation of the system so as to counter the detected change in the aspect of performance of the system.

The apparatus may further comprise means for reconfiguring the system to adjust the operation thereof and/or means for adjusting an input to the system to adjust the operation thereof.

According to a preferred aspect, the value indicative of the aspect of performance of the system relative to operation of the system in the plurality of first sub-periods is an average of values indicative of the aspect of performance of the data processing system relative to operation of the system in each of the plurality of first sub-periods.

According to preferred aspects, the system comprises a database management system an/or the aspect of performance is represented by a database key performance indicator.

According to a second aspect, a method is proposed comprising generating a value representative of an aspect of performance of a data processing system relative to operation of the system in a first sub-period in each of a plurality of first time periods; in which each first sub-period is located with the same degree of offset within the respective first time period; the method further comprising detecting a change in the aspect of performance by comparing the value generated with a value indicative of the aspect of performance relative to operation of the system in a second sub-period of a second time period; in which the second sub-period is located with a degree of offset relative to the second time period that is the same as the degree of offset each first sub-period has relative to the respective first time period; and the method further comprising initiating adjustment of operation of the system so as to counter the detected change in the aspect of performance of the system.

### Brief Description of the Figures

In order to aid understanding, embodiments of the invention will now be described by way of example with reference to the drawings in which:
Figure 1 and 5 show in block diagram form, a system according to aspects of the present invention;
Figure 2 shows a database report according to an aspect of the present invention;
Figures 3a, 3b and 4 show graphical representations according to aspects of the present invention.

### Detailed Description of Embodiments of the Invention

The invention seeks to address the problem of efficiently detecting divergence from expected behaviour of a data processing system, which may adversely affect its performance, where a large amount of data indicative of performance is generated and performance of the data processing system varies cyclically over a time period of interest.

In order to allow trend or significant divergence from expected behaviour to be efficiently identified from a large amount of data in the presence of cyclical variations over a time period of interest, such as a day, a year and a financial reporting period, an apparatus and method are proposed for analysing KPls relating to operation over discontinuous or non-contiguous time intervals (sub-periods) over a plurality of periods of interest. In this way, the invention allows a trend or significant divergence from expected behaviour to be efficiently identified and corrected. This is particularly valuable for a large data processing system whose ability to operate at or above a minimum level of performance is critical, such as a billing system, web server or database. By way of example, a database may handle large volumes of data from an important communications system such as a call-centre or communications server and therefore be crucial to the correct management thereof.

It is Important to identify changes due to internal factors.- such as application software changes, hardware changes, changes to data. However it is also important to identify the impact of other factors - such as a change in workload (e.g. due to call-centre shift patterns or extra product sales following a marketing campaign) and changes to vendor-supplied software running on the data processing system (e.g. a patch to database software). In a preferred embodiment, the invention supports this by capturing data on KPIs including workload-related factors.

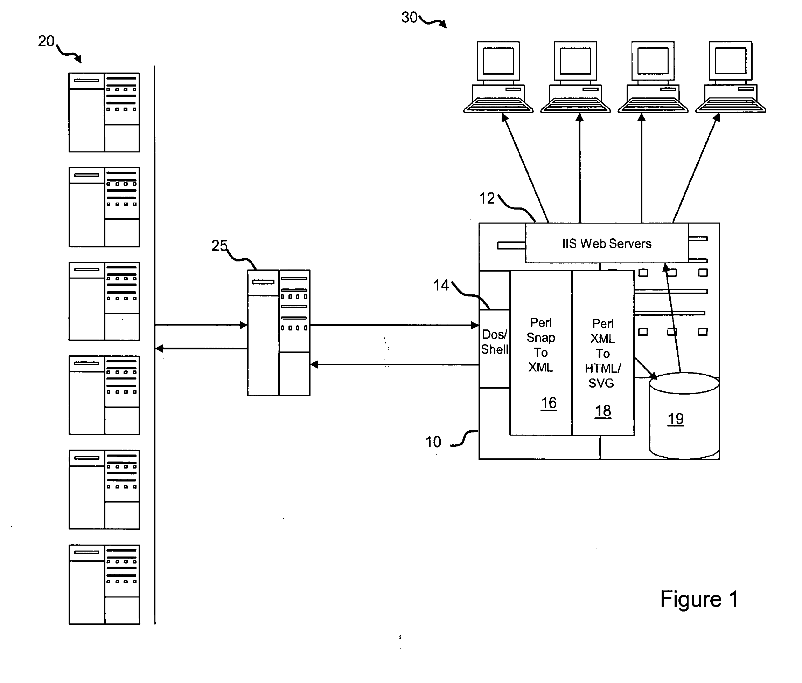

Figure 1 shows, in block diagram form, a system suitable for implementing the present invention. According to a preferred embodiment GAP server 10 supporting the GAP tool receives KPIs from a large-scale complex data-processing system: in this example a database running on plurality of database servers 20 such as Sun Microsystems Sunfire M9000 running Solaris 5.10 Operating System. GAP server 10 provides to database administrators or other users of the GAP tool operating user terminals 30, enhanced information on the performance of the database. According to this preferred embodiment, information is provided to the users in the form of a web site (the GAP website) served by IIS web server 12 (or, in an alternative embodiment, by an Apache web server). The GAP web site provides a portal that allows users to view, on user terminals 30, graphical and textual data and allows the users to interact with GAP server 10 by inputting commands via the web site.

Database servers 20 generate AWR reports, which may be provided over Oracle Net8 or Oracle SQL*Net middleware to GAP server 10 by a Unix shell script (not shown) running on plurality of database servers 20 or remotely via a proxy Unix server (not shown). To improve efficiency, the plurality of database servers 20 is preferably connected to GAP server 10 via OEM Grid server 25 hosting Oracle Enterprise Manager Grid Control (OEMGC) software, which has secure access to database servers 20. When used, OEM Grid server 25 posts information to GAP server 10 using IETF File Transfer Protocol (FTP) and receives commands form GAP server 10 over IETF Secure Shell protocol (SSH) or IETF Secure File Transfer Protocol.

Communications with OEM Grid server 25 and plurality of database servers 20 is controlled for GAP server 10 by Dos Shell 14. A first Perl application 16 running on GAP server 10 looks for AWR report information incorporated in incoming files received at Dos Shell 14 and converts the AWR report information received to XML format. A second Perl application 18 running on GAP server 10 processes the received XML-formatted AWR report information. The second Perl application 18, selects KPIs from the XML-formatted AWR report information. Local storage 19 is provided on GAP server 10 for HTMUSVG Web Pages.

Each time period is made up of a plurality of sub-periods and KPI information is available for each of the sub-periods. For each KPI, a typical value is generated, according to the present invention, from the KPI information relating to a plurality of discontinuous or non-contiguous first sub-periods, each of the plurality located within, and having the same degree of offset with respect to, a respective one of first time periods.. Equivalent values are generated for different sub-periods located with different offsets with respect to the first time periods. Second Perl application 18 may be configured to present the information in HTML.

The typical value generated is representative of an aspect of performance in a specific sub-period over a plurality of first time periods. Each value representative of an aspect of performance over a plurality of time periods is generated from KPI information from a plurality of non-contiguous sub-periods, for example: from the time slot between 12:00 and 12:14 (the sub-period) in each Tuesday (the time period) from the last ten weeks. The value represents a norm or typical value of the aspect of performance for the specific sub-period.

GAP is an abbreviation of Graphical AWR Prediction and, in a preferred embodiment, the GAP tool running on server 10 provides, to user terminals 30 for display in a graphical format, each value representative of an aspect of performance over a plurality of first time periods together with a corresponding value indicative of the aspect of performance over a second time period..

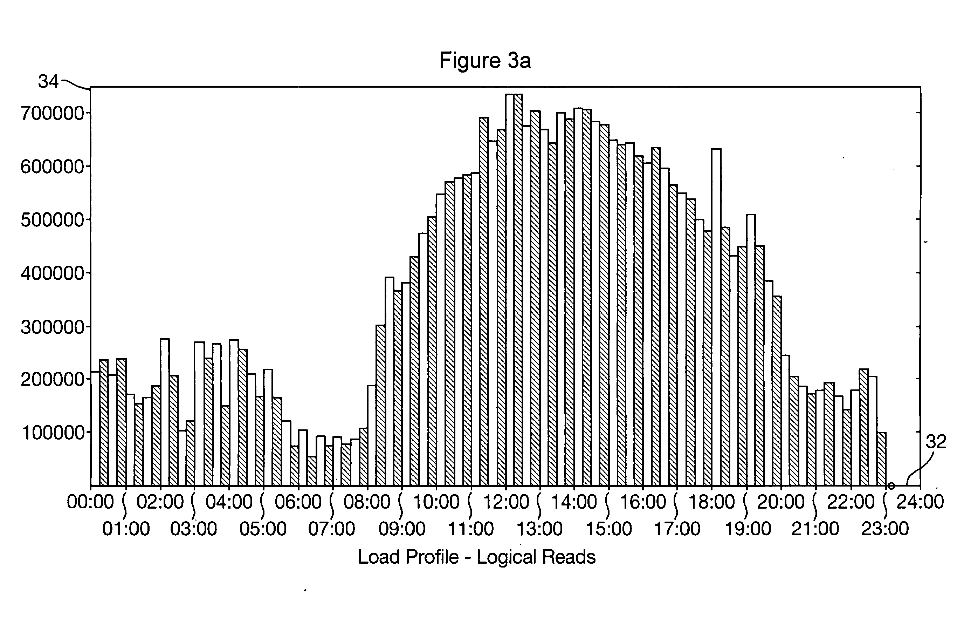

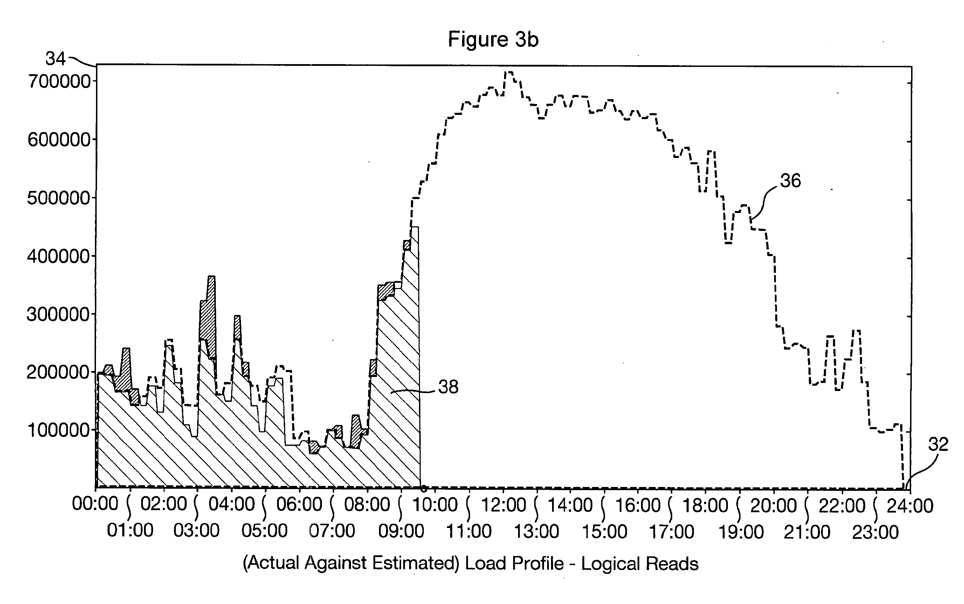

Preferably, the values are converted to graphical format by a plug-in (not shown) on GAP server 10 such as Adobe SVG. A graphical format is selected to provide the users with a clear indication of divergence from the norm. A suitable graphical format is illustrated in Figure 3.

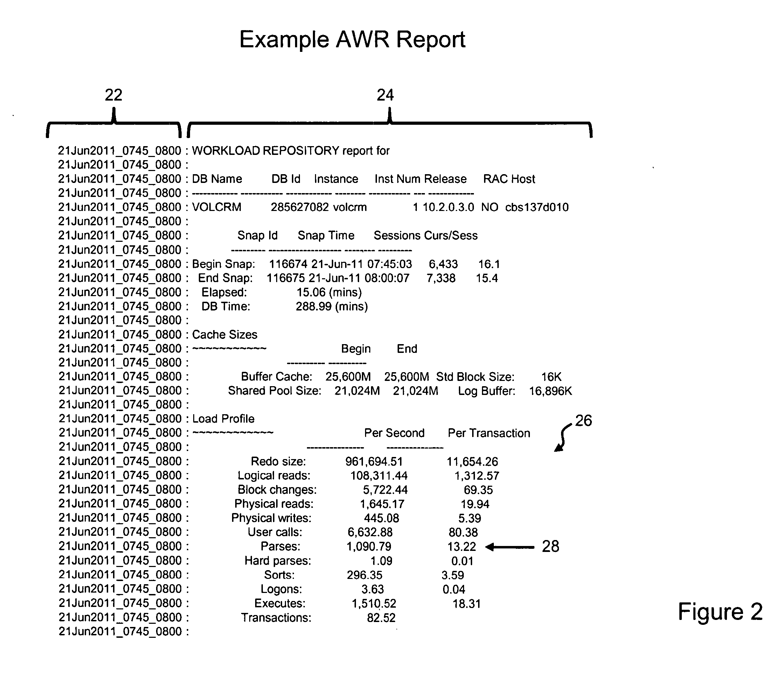

Figure 2 shows standard Oracle AWR Report 24, modified to contain additional columns 22 that provide, on each line of the report, the time period of the snapshot the report relates to. The data in columns 22 is not part of a standard Oracle AWR report and is specially created for the present invention. A set of KPIs is shown in columns at 26. Each row in columns 26 presents information on a different KPI: For example, at row 28 information on the number of parses over the snapshot is presented.

Figure 3a shows a graphical representation (bar-chart) of values indicative of an aspect of performance of a data-processing system over a single second time period of one day (24 hours) i.e. corresponding to operation of the data processing system in a current or recent time period. Along x-axis 32, the time period is divided into sub-periods of 15 minutes each, giving a total of 96 sub-periods over each day. The value indicative of the aspect of performance in each 15 minute sub-period of the single second time period is indicated by the height of the bar occupying the relevant position along the x-axis 32. The offset of each sub-period within the time period is represented by the position of the sub-period along x-axis 32. The value represented by each bar may be read off against the y-axis 34, which shows (in the present example) numbers of logical reads.

Figure 3b has the same x-axis 32 and y-axis 34 as Figure 3a. Figure 3b shows as a line graph 36, a graphical representation of values representative of an aspect of performance of the data-processing system in each 15 minute sub-period over a plurality of first time periods, each of one day. Each segment of the line graph is representative of the value of an aspect of performance in a plurality of non-contiguous sub-periods over the plurality of first time periods. Each of these values is an indication of the norm for the aspect of performance for that sub-period. Line graph 36 covers the entire time period and takes the form of a dashed line. The value indicative of the aspect of performance in each sub-period of the first time periods is indicated by the height of the segment of line graph 36 in the relevant position along the x-axis 32. The value represented by each segment of the line may be read off against the y-axis 34.

Line graph 36 is presented as a prediction of performance expected during a corresponding second time period. Figure 3b also shows, in the form of bar-graph 38, the actual values for a part of the corresponding second time period from midnight up to a specific time (i.e. up to 10:00 am).

It will be noticed that the divergence from the norm of the values in the single second time period is readily identifiable by the user from the graphical display of Figure 3b. By way of example, it will be noted that different shading may be used in bar graph 38 to indicate deviation from the norm. The graphical representations using bar graphs and line graphs may be swapped or substituted, in alternative aspects of the invention, with other graphical representations that allow for easy comparison of the values.

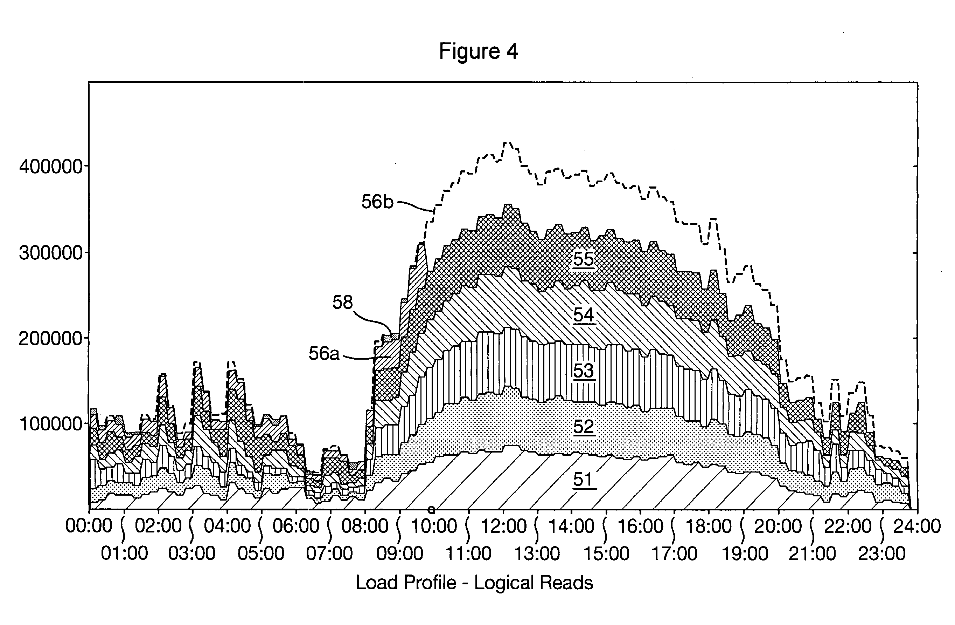

The plurality of first time periods are distinct, non-overlapping and may be contiguous (such as every month of a year from June to December) or separated in time (such as every Tuesday from the last several weeks). In either case, the first sub-periods are always separated in time (non-contiguous or discontinuous) as each sub-period forms part of a larger, distinct period. The latter case is illustrated in Figure 4. Figure 4 shows stacked line graphs 51-55, each line graph representing historical data for a period of one day from each of five different weeks. In Figure 4, the historical line graphs are stacked on each other so that, whereas the baseline for graph 51 is the x-axis, the baseline for graph 52 is graph 51, the baseline for graph 53 is graph 52, and so on.

Figure 4 also shows stacked line graph 56 (56a, 56b) relating to a period of one day from a specific week, e.g. the current or a recent week. Line graph 56 is in two parts. A first part 56a is shown by shading and represents the actual values for a first part of the time period from the specific week from midnight up to a specific time (i.e. up to 10:00 am). A second part 56b covers the entire time period and takes the form of a line. Second part 56b represents the norm derived from the previous five weeks' information and is presented as prediction of performance expected during the corresponding time period from the specific week. Each segment of the line graph is representative of the value of an aspect of performance in a plurality of non-contiguous sub-periods in a plurality of first time periods. The depth of shading used at 56a to represent data for the period from the specific week varies: a darker shade being used to indicate deviation from the norm.

By way of example, it will be noted that the shading of line graph 56a is darker at section 58, indicating deviation from the norm. According to a further embodiment, the user is provided with the ability to "drill down" to view information relating to the indicated section in greater detail. Greater detail may be provided, for example, by displaying the indicated section at a larger scale or by providing further textual information, including details of the relevant SQL code.

A number of possible actions will be available aimed at improving performance or counteracting an adverse change in operation resulting in a reduction in performance. In any situation, one or more of the following may be available and may be selected, either singly or in various combinations: re-configure system hardware, re-configure software (e.g. vendor provided software or user-customised code) running on the system, re-configure an interface with the system, re-configure data processed by the system and alter workload. These options will now be described in more detail with reference to the following examples.

Reconfigure hardware
- Add an additional system board comprising processing and memory circuitry to a server of the data processing system to alleviate processor and memory overload indicated by the GAP tool. This would involve shutting down the data processing system temporarily.
- Introduce additional capacity for mid-tier (e.g. supporting application software and business logic) or front-end (e.g. supporting interaction with users operating a web browser) operations to cope with additional users to the system due, for example, to increased business demand following an advertising campaign.

Reconfigure software.
- Reconfigure internal memory structures of a database to alleviate performance issues related to indicated excessive load on such memory structures. For example, in Oracle databases, reconfigure the SGA (System Global Area) which is used as a database cache and shared pool.
- Instigate an amendment to workload schedules so they do no contend with each other thus making more efficient use of hardware resources and improving workload throughput.
- Reconfigure application software parameters at web server or mid-tier level to throttle throughput, thereby easing workload on the database

Reconfigure Interfaces
- Data processing systems often interface with other systems either upstream or downstream to share data and to pass on data for further processing in the business life cycle. The GAP tool can indicate unsatisfactory KPI levels for interface workloads. An immediate solution is to delay processing or to reduce the volume of data processed by interfaced systems.
- A longer-term solution is to apply to interfaced systems similar changes to those described above under 'reconfigure hardware' and 'reconfigure software'.

Reconfigure data processed
- Often performance is closely related to volume of data. Having more data to process requires more hardware, more powerful systems etc. Housekeeping/archiving activities may reduce the amount of data, thus reducing processing requirements and resulting in better performance.
- Surges in the values of some KPls may result from logical data corruption or application faults. Such surges will be clearly visible from graphs generated by the GAP tool (as shown in Figures 3a, 3b and 4). The situation may be alleviated by correcting the data (various methods are available). The application code may also be amended.

Reconfigure code
- Abnormal levels of KPls can reveal poorly written programming and SQL (Structured Query Language) code. Poor code is often the primary cause of performance issues on database data processing systems. The drill down capabilities of the GAP tool help to identify the root cause of the abnormal KPI levels. The code may then be amended to perform more efficiently.

In addition, a number of possible actions will be available by affecting factors external to the system. Input (control) parameters and system inputs may be adjusted to re-configure the system to improve performance or counteract an adverse change in operation resulting in a reduction in performance. A system input may include sessio n profile (e.g. workers shift patterns, where every worker stops work between 1 and 2 for lunch).

### Calculating Typical Values/ the Norm

According to a preferred implementation, an average value is generated from the sum of the values for each first sub-period and the number of first sub-periods.

### Smoothed Average

As an alternative implementation, a smoothed average may be obtained by determining the amount of change over a sub-period and dividing the amount of change by an integer to arrive at a fractional change. The sub-period is then divided by the same integer and for each division of the sub-period a change equivalent to the fractional change is assigned. For example, a sub-period could be divided by three and a single step-change of 12 replaced with three step-changes of four.

### Median

As an alternative implementation, the median value is generated and is used in place of the average value.

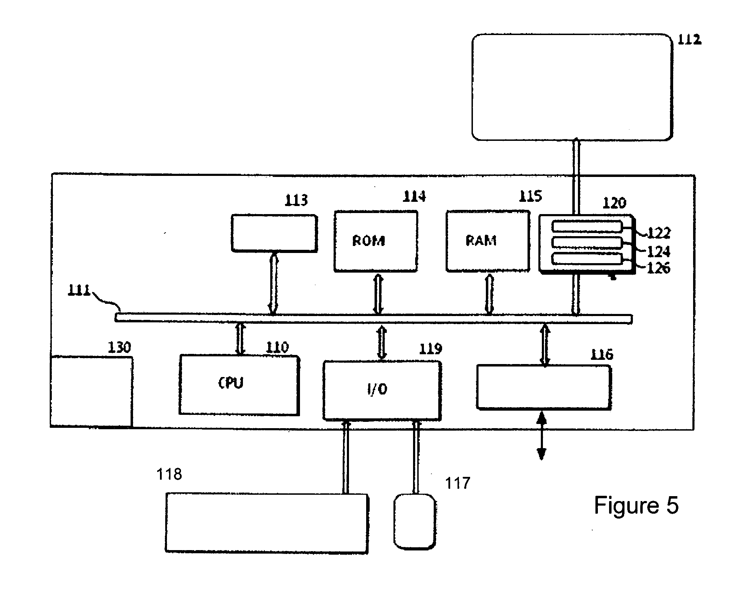

A typical architecture for a server or other form of computer apparatus on which software implementing the invention can be run, is shown in Figure 5. Each computer apparatus comprises a central processing unit (CPU) 110 for executing computer apparatus programs and managing and controlling the operation of the computer apparatus. The CPU 110 is connected to via a bus 111 to a variety of devices including solid-state memory devices including non-volatile ROM 114, volatile RAM 115 and non-volatile data storage means. The non volatile data storage means may comprise one or more hard disc drives 120; in addition there may be provided removable non volatile data storage means (not shown), such as removable hard disc drives or optical media (for example re-writable or recordable DVDs) and.

The computer apparatus further includes one or more network interface 116 (one shown) for interfacing to and exchanging data via one or more network (not shown) such as an IP network underpinning the various connections shown in Figure 1. The network interface(s) may be a local area network (LAN) adaptor connecting to a LAN. The LAN may itself be connected to other LANs and wide area networks (WANs) to enable the apparatus to communicate with and exchange data with other computer apparatuses. Alternatively, the network interface may be a DSL modem, or similar, that provides a connection to a WAN, such as the internet or an intranet, which enables communications with further networks.

The computer apparatus can also, optionally, include user input/output devices such as a mouse 117 and keyboard 118 connected to the bus 111 via input/output port 119, as well as a display 112. The computer apparatus is powered by power supply unit 130, typically obtaining power from an external power grid or internal battery (not shown). The skilled person will understand that this architecture is not limiting, but is merely an example of typical computer apparatus architecture. The computer apparatus may also be a distributed system, comprising a number of computer apparatuses communicating through respective interface ports 116 such that a user may access program and other data stored on a remote computer apparatus.

Non-volatile data storage means 120 comprises an operating system 122 and may comprise one or more application programs 124. Operating system 122 comprises the software that the computing apparatus requires to operate, communicate with other computer apparatuses, receive input from users, display outputs and results to users, etc. Application programs 124 can be executed by the apparatus in order to provide additional functionality. Non volatile data storage means 120 further comprises computer apparatus code 126 which can be executed in order to perform a method according to the present invention, for example such as the one described above and illustrated in the drawings. It will be understood that computer apparatus code 126 may comprise a single integrated application or a number of different modules that are accessed separately to execute a method according to the present invention. Each module may perform the functionality of one or more of the processes (for example generating a value or detecting a change), which comprise the present invention.

The above embodiments are to be understood as illustrative examples of the invention. Further embodiments of the invention are envisaged and will be evident to the skilled reader. It is to be understood that any feature described in relation to any one embodiment may be used alone, or in combination with other features described, and may also be used in combination with one or more features of another of the embodiments, or any combination of the embodiments. Furthermore, equivalents and modifications not described above will be evident to the skilled reader and may also be employed without departing from the scope of the invention, which is defined in the accompanying claims.

Although described above with reference to a single KPI, multiple KPIs may be processed and may be combined in order to provide a more accurate view of changes in performance. Although described above with reference to generating a single value representative of an aspect of performance over a plurality of first time periods, multiple values relating to different aspects of performance may be generated and used to detect changes in one or more aspects of performance. The invention has application to data-processing systems of all sizes and all levels of complexity, although the benefits may be more pronounced in cases of large-scale complex data-processing systems. Although described above, by way of example, with reference to a data processing system that has an automatic monitoring system, the invention has application to any system for which KPIs are available. Although described above with reference to a value corresponding to operation of the data processing system in a current or recent second time period, the timing of the relevant second time period is not restricted and may occur prior to, during or after the plurality of first time periods.

As will be understood by those skilled in the art, the invention may be implemented in computer program product software, any or all of which may be contained on various storage media so that the program can be loaded onto one or more general purpose computers or downloaded over a computer network using a suitable transmission medium. The computer program product used to implement the invention may be embodied on any suitable carrier, readable by a suitable computer input device, such computer program product comprising optically readable media, magnetic media, punched card or tape.

## Claims

1. An apparatus comprising
means for generating a value representative of an aspect of performance of a data processing system relative to operation of the system in a first sub-period of each in a plurality of first time periods; in which each first sub-period is located with the same degree of offset within the respective first time period;
means for detecting a change in the aspect of performance by comparing the value generated with a value indicative of the aspect of performance relative to operation of the system in a second sub-period of a second time period; in which the second sub-period is located with a degree of offset relative to the second time period that is the same as the degree of offset each first sub-period has relative to the respective first time period; and
means for initiating adjustment of operation of the system so as to counter the detected change in the aspect of performance of the system.

2. The apparatus of claim 1 further comprising means for reconfiguring the system to adjust the operation thereof.

3. The apparatus of any above claim further comprising means for adjusting an input to the system to adjust the operation thereof.

4. The apparatus of any above claim in which the value indicative of the aspect of performance of the system relative to operation of the system in the plurality of first sub-periods is an average of values indicative of the aspect of performance of the data processing system relative to operation of the system in each of the plurality of first sub-periods.

5. The apparatus of any above claim in which the system comprises a database management system.

6. The apparatus of any above claim in which the aspect of performance is represented by a database key performance indicator.

7. A method comprising
generating a value representative of an aspect of performance of a data processing system relative to operation of the system in a first sub-period in each of a plurality of first time periods; in which each first sub-period is located with the same degree of offset within the respective first time period;
detecting a change in the aspect of performance by comparing the value generated with a value indicative of the aspect of performance relative to operation of the system in a second sub-period of a second time period; in which the second sub-period is located with a degree of offset relative to the second time period that is the same as the degree of offset each first sub-period has relative to the respective first time period; and
initiating adjustment of operation of the system so as to counter the detected change in the aspect of performance of the system.

8. The method of claim 7, further comprising reconfiguring the system to adjust the operation thereof.

9. The method of any of claims 7 to 8, further comprising adjusting an input to the system to adjust the operation thereof.

10. The method of any of claims 7 to 9, in which the value indicative of the aspect of performance of the system relative to operation of the system in the plurality of first sub-periods is an average of values indicative of the aspect of performance of the data processing system relative to operation of the system in each of the plurality of first sub-periods.

11. The method of any of claims 7 to 10 in which the system comprises a database management system.

12. The method of any of claims 7 to 11 in which the aspect of performance is represented by a database key performance indicator.

13. A computer readable storage medium containing executable computer program code which, when executed by a computer system causes the system to perform the method of any of claims 7 to 12.
